(19) **Europäisches Patentamt**

**European Patent Office**

**Office européen des brevets**

(11) **EP 1 239 417 A1**

(12) **EUROPEAN PATENT APPLICATION**

(43) Date of publication:
**11.09.2002 Bulletin 2002/37**

(51) Int Cl.⁷: **G06T 15/50**

(21) Application number: **02003028.4**

(22) Date of filing: **12.02.2002**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **28.02.2001 EP 01460016**

(71) Applicant: **Thomson Licensing S.A.
92100 Boulogne (FR)**

(72) Inventors:
• **Stauder, Jürgen
92648 Boulogne Cedex (FR)**

• **Robert, Philippe
92648 Boulogne Cedex (FR)**
• **Nicolas, Yannick
92648 Boulogne Cedex (FR)**

(74) Representative: **Browaeys, Jean-Philippe et al
Thomson multimedia
European Patents Operations
46, quai Le Gallo
92100 Boulogne Cedex (FR)**

(54) **Method and device to calculate light sources in a scene and to generate mutual photometric effects**

(57)     A method to estimate light sources in a common support space comprising at least one visual data set associated with at least one support space having a position, a dimension and a size. The position of the light sources is determined according to the position, the dimension and the size of the individual support space and the color distribution is determined according to the visual data set.

A method to generate mutual photometric effects in a common support space between a plurality of visual data, in which one positions the visual data sets in a common support space. One estimates light sources and one applies estimated light source information so that at least one first visual data set illuminates at least a second visual data set.

FIG 1

**Description**

The invention concerns a method and a device to estimate light sources in a common support space and a method and device to generate mutual photometric effects using light sources.

Applying special effects methods has been for a long time a working field in the industry. More and more, applications, such as interactive television, or any multimedia applications will bring the need of efficient data manipulation.

The invention concerns particularly the merging of different data sets for displaying and the mutual interaction of these different data sets. Namely, in order to improve the interaction between visual data sets or audiovisual data sets, it is important that some parameters of the different data sets modify the other data sets and among these parameters, the illumination.

To result in a realistic or nice looking final image, mutual photometric effects between different visual data sets have to be considered. This is especially true when importing a three-dimensional object in front of a video sequence for instance.

Various methods exist to apply mutual photometric effects to visual data like shading, specular reflections, cast shadows, mutual illumination.

Thus, the patents US-5,488,428 "video special effect generating apparatus" and US- 5,295,199 "image transforming method and apparatus" propose to transform a video image into a three-dimensional surface and to apply then illumination to it. However, these photometric special effects apply to images from a single video and are thus no mutual photometric special effects.

Japanese patent 11,355,654 "special effect video signal processing method and special effect video signal processor" further proposes a mutual special effect method for several video images. However, the special effects do not address illumination or reflection but the generation of synthetic motion trails of moving objects.

A method proposed by Pentland in 1982 in the "journal of optical society of America" on pages 448 to 455 restricts the visual data to one single image of a unicolored sphere-like object of known position and shape. Other methods proposed by Sato, Sato and Ikeuchi in the proceedings of ICCV'99 pages 875 to 882 entitled "illumination distribution from brightness is shadows: adaptive estimation of illumination distribution with unknown reflectance properties in shadow regions" extend the visual data to a single image of any content but they require a fish-eye image showing the upper half-sphere of the scene.

Mukawa in volume 23 of "Systems and Computers in Japan", pages 92 to 99, entitled " estimation of light source information from image sequence" and Stauder in an article of "IEEE Transactions on Multimedia volume 1", pages 136 to 143, entitled "augmented reality with automatic illumination control incorporating ellipsoidal models" proposed light source estimation methods that require additionally the knowledge on scene shape and object motion.

Zhukov, Iones and Kronin in an article of "Rendering Techniques '98, proceedings of the Eurographics workshop", pages 45 to 55, entitled "an ambient light illumination model" proposed a method for visual data sets as three-dimension objects. However to estimate the light sources representing a specific visual data set, they need as additional input other visual data sets to set up global illumination equations.

The present invention is applicable to any type of visual data of any content, while the document Pentland mentioned above is restricted to single images of sphere-like objects. The present invention allows to determine light sources for a visual data set without any other required input data as fish-eye images as required by the document Sato, Sato and Ikeuchi, mentioned above, scene shape and object motion as required in the documents of Mukawa and Stauder mentioned above or any other visual data sets as proposed by Zhukov, Iones and Kronin. The present invention is simple and enables to determine a number of light sources for any type of visual data sets of any content.

One object of the invention is a method to estimate light sources in a common support space comprising at least one visual data set respectively associated with at least one individual support space having a position in the common support space, a dimension and a size.

According to the invention the position of the light sources is determined according to the position, the dimension and the size of the individual support space associated with said at least one visual data set and in that said light sources have a color distribution that is determined according to said at least one visual data set.

Positioning the light sources according to the properties of the individual support spaces and estimating the intensity (color distribution) from the visual data is very simple compared to the known methods.

A set of visual data can be video images, panoramic images, three-dimensional images, three-dimensional objects, audiovisual information or other visual information in any format. It can be still or dynamic, it can be monochrome or colored or it can be of other nature. The term color being here used for color, luminance, chrominance or other intensity value. A set of visual data can be compressed or decompressed.

In a preferred embodiment, for each of said visual data sets :

- one determines the number N of light sources,

- one determines the position of the N light sources, and
- one determines the intensity of each light source.

In an advantageous manner, the number N of light sources is derived automatically from the size of the individual support space associated with the considered visual data set.

This is a simple method to estimate the number of light sources, as no special input is necessary.

Advantageously, the position of the light sources depends on former positions of the light sources when at least one of said visual data sets is dynamic.

This avoids unnecessary calculations when the visual data set is for example a video. In this case, the light sources position of the previous frames can be kept for the at least following frame.

The spatial color distribution of at least one of the light sources is determined from a filtering function of the visual data set for said light source in a spatial and/or temporal neighborhood of the light source position.

The invention relates also to a method to generate mutual photometric effects in a common support space between a plurality of visual data sets respectively associated with individual support spaces, in which one positions the visual data sets in a common support space
characterized in that:

- one estimates light sources for each of said visual data sets, and
- one applies estimated light source information derived from said estimated light sources for at least a first of said visual data sets to at least a second of said visual data sets so that the first visual data set illuminates the second visual data set.

As opposed to the known methods, this method is not based on global illumination, which is of high computational cost. The proposed method can generate photometric effects from a small number of light sources that represent the light of the visual data sets.

This method, as opposed to the known estimation methods, enables to generate mutual photometric effects from a small number of light sources that represent the light of the visual data sets, which contrasts with the known global illumination algorithms.

In a preferred embodiment, before applying said estimated light source information derived from said estimated light sources for said first visual data set to said second visual data set, one moves at least one of said light sources out of the individual support space associated with said first visual data set.

This is especially interesting to get a realistic illumination in three dimensions for several visual data sets.

According to a preferred embodiment the estimation of the different light sources for the plurality of data sets is done according to the method of any of claims 1 to 5.

So, all the advantages of the fast light source estimation method are combined to the photometric effect generation method and simplify the method.

The invention concerns also a device to estimate light sources in a common support space comprising at least one visual data set respectively associated with at least one individual support space having a position in the common support space, a dimension and a size.

According to the invention the device is intended to determine the position of the light sources for each of said visual data sets according to the position, the dimension and the size of the individual support space associated with said visual data set and to provide a color distribution for said light sources that is determined according to said visual data set.

The invention concerns also a device to generate mutual photometric effects in a common support space between a plurality of visual data sets respectively associated with individual support spaces, comprising means for positioning the visual data sets in a common support space. According to the invention the said device comprises :

- means for estimating light sources for each of said visual data sets, and
- means for applying estimated light source information derived from said estimated light sources for at least a first of said visual data sets to at least a second of said visual data sets so that the first visual data set illuminates the second visual data set.

The invention concerns also an audiovisual terminal comprising

- means for receiving a first visual data set,
- means for requesting the display of at least a second data set cooperating with the first data set,
- means for indicating the position of the at least second data set on the display,
- means for generating photometric effects, and

# EP 1 239 417 A1

- means for displaying said visual data sets and modifying them according to the generated photometric effects,

According to the invention the said means for generating photometric effects comprise

- means for estimating light sources for each of said visual data sets, and
- means for applying estimated light source information derived from said estimated light sources for at least a first of said visual data sets to at least a second of said visual data sets so that the first visual data set illuminates the second visual data set.

The invention concerns also a television receiver or a set-top box, any mobile terminal having the characteristics of the device to generate mutual photometric effects mentioned above, the advantages of the television receiver, the mobile terminal being the same as the ones of the methods of photometric effects generation.

Other characteristics and advantages of the invention will appear through the description of a non-limiting embodiment of the invention, which will be illustrated, with the help of the enclosed drawing.

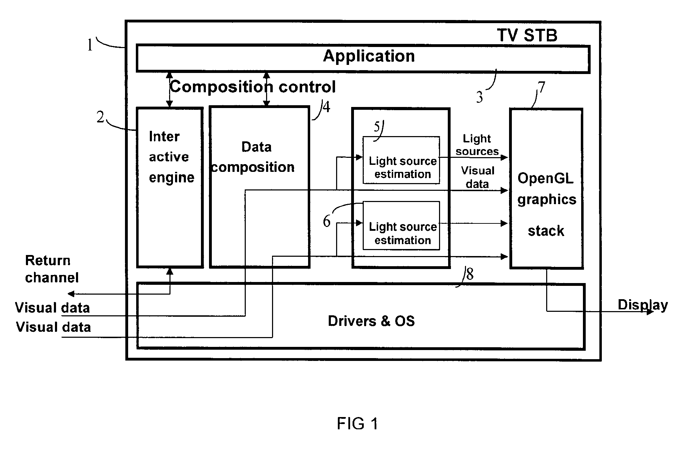

Figure 1 represents a television decoder 1 including light source estimation modules 5 and 6 according to the invention.

The television decoder includes an interactive engine 2. Connected to the interactive engine, the application 3 contains a user interface and allows the user to select any program on its television decoder for displaying on a display (not represented). The display can be a television screen, a computer screen, an auto stereoscopic display or a display into computer memory for storage or retransmission purpose. The interactive engine allows the user to select a new program or a new visual data set he wants to display while looking at another program. There will be a merge on the display of the different requested visual data sets. The visual data sets can be a video, a three-dimension image, a three-dimension object, a background picture, an audiovisual data set. The interactive engine 2 loads the visual data sets. The drivers and operation system 8 can contain a network interface (not on the drawing) in order to download visual data sets from the World Wide Web or from a local visual data sets database for example.

The television decoder also includes a data composition module 4. The different visual data sets are positioned in a common support space which can be a three-dimension space by the data composition module 4 which is controlled by a composition control signal. The composition control signal can be generated interactively by a user or delivered by any other means. The result is a for example three-dimensional scene composed of several visual data sets. Visual data sets may be defined to be partially or entirely transparent by the positioning control signal. Examples are several 3D objects, 3D objects in front of an image or a panorama. Other combinations are possible.

The light source estimation modules 5 and 6 estimate the light sources of the different visual data sets in their own support space as described further in this document.

Once the light source estimation modules have estimated the light sources number, position and spatial color distribution, the visual data sets are sent to the rendering means 7 which project the visual data sets into a for example two-dimensional display using the light source estimation module information. The rendering means 7 can be an OpenGL graphics stack (OpenGL is a trademark of Silicon Graphics Incorporated) on a personal computer graphics card or any other system or method for image synthesis.

An openGL stack performs the geometric and photometric projection of visual data of two or three dimensions onto a two dimensional display plane.

The geometric projection determines the position and geometric transformation of the visual data. The photometric projection determines the appearance of the visual data including photometric effects. Using the light sources, the OpenGL stack can generate photometric mutual effects as for example shadowing, specular reflection and cast shadows. Other photometric effects can also be considered.

We will now describe the light source estimation modules behavior. The following description describes a simple example in which the visual data set includes only a single color channel and the support space is a two-dimension space. For further simplicity, in the following description, the visual data set is considered at one time instant only.

Let s(u,v) be the single channel color signal of a visual data set with u,v the coordinates of the two-dimensional support space of size U x V.

A light source estimation module receives as input a visual data set in its own support space.

First, the number N of light sources of the support space is determined. Several issues exist to determine this number of light sources. One simple way is to output N from the image size. For example, N can be calculated as follows:

$$N = \frac{UV}{100000}$$

U and V being the dimensions of the support space.

This gives for an image of 704 columns and 576 lines, a value of N equal to 4. N can be derived by other adaptive formulas, it can be fixed or it can be derived by any other means.

Secondly, the light source estimation module determines the position of the light sources. The light sources are initially positioned in the support space of the visual data set and then, optionally, moved out of the support space.

A light source $L_n$ with $0{\leq}n{<}N$, N can be positioned in the support space of size $U \times V$ at the position $u_n,v_n$ in a regular manner according to

$$u_n = \frac{2n+1}{2N}U \quad \text{and} \quad v_n = \frac{2n+1}{2N}V \, .$$

It may also be positioned in a random manner or by any other algorithm. The three-dimensional position

$$P_n = \begin{pmatrix} x_n \\ y_n \\ z_n \end{pmatrix}$$

of the $n$-th light source in the three-dimensional space is given by the position of the data set in the three-dimensional space (determined by the composition control module 4) and the 2D position $u_n,v_n$. Then, the light source may be moved out of the support space onto a three-dimensional position. The light source can be moved out vertically according to

$$P_n' = P_n + \alpha R_n$$

with $R_n$ the 3D surface normal to the two dimensions support space of the visual data set at $P_n$ and $\alpha$ a constant and O the center of gravity of the visual data set. The light source can also be moved out to infinity according to

$$P_n'' = O + \alpha(P_n - O + R_n|P_n - O|)$$

with $O$ the center of gravity of the visual data set and $\alpha{\to}\infty$. Other operations are possible to move a light source out of the support space.

Third, the spatial color distribution is determined for each light source. Here, the case of monochrome point light sources is considered where the special color distribution simplifies to a color. The light source can also be an area light source or any other type. In case of a single color channel signal $s(u,v)$, the color of the n-th light source is a single scalar $I_n$. The intensity $I_n$ is calculated from the result $\mu_n$ of a filtering operation in a local neighborhood of the initial light source position $u_n,v_n$ in the support space of the visual data set. The filtering operation weights and combines neighboring color values according to a weight function $\beta(u,v)$ according to

$$\mu_n = \sum_{\substack{u_n-\Delta u<u<u_n+\Delta u \\ v_n-\Delta v<v<v_n+\Delta v}} \beta(u_n - u, v_n - v)s(u,v)$$

where $\Delta u, \Delta v$ is the size of neighborhood and may be

$$\Delta u = \frac{U}{2N}, \Delta v = \frac{V}{2N}$$

or of any other size, for example the entire visual data set. The weight function is normalized over the neighborhood. It can be constant according to

$$\beta(u,v) = \frac{1}{4\Delta u\Delta v}$$

or of any other type. The weight function may depend on the position of the light source. If the visual data is dynamic, the intensity of a light source can be filtered in time to ensure temporal stability, the filtering neighborhood is spatio-temporal. Other weight functions are possible.

The light source intensity $I_n$ is normalized and can be derived from the filtering results $\mu_n, 0 \leq n < N - 1$ according to

$$I_n = \begin{cases} 0 & I_n' < 0 \\ 1 & I_n' > 1 \\ I_n' & else \end{cases} \qquad with \qquad I_n' = \frac{1}{N} + \eta\left(\frac{\mu_n}{\sum\limits_{i=0\ldots N-1}\mu_i} - \frac{1}{N}\right)$$

where $\eta \geq 0$ is an amplification factor. The light source intensities can also be non-normalized. This can be achieved by weighting the light sources for example according to

$$I_n'' = I_n\left(1 + \lambda \sum\limits_{i=0\ldots N-1}\mu_i\right)$$

with $\lambda$ being an intensity control parameter. Other weights are possible.

Visual data sets with more than one color channel are processed channel by channel as described for the channel $s$. Visual data sets with non-two-dimensional support spaces are treated as described by considering more or less dimensions. The light sources can also be estimated from visual data of different time instants. In this case, the neighborhood for the filtering operation is spatial and temporal.

## Claims

1. Method to estimate light sources in a common support space comprising at least one visual data set respectively associated with at least one individual support space having a position in the common support space, a dimension and a size,

   **characterized in that** the position of the light sources is determined according to the position, the dimension and the size of the individual support space associated with said at least one visual data set and **in that** said light sources have a color distribution that is determined according to said at least one visual data set.

2. Method according to claim 1 wherein for each of said visual data sets :

   - one determines the number N of light sources,
   - one determines the position of the N light sources, and
   - one determines the intensity of each light source.

3. Method according to claim 1 or 2 wherein the number N of light sources is derived automatically from the size of the individual support space associated with the considered visual data set.

4. Method according to any of claims 1 to 3 wherein the position of the light sources depends on former positions of the light sources when at least one of said visual data sets is dynamic.

5. Method according to any of claims 1 to 4 wherein the spatial color distribution of at least one of the light sources is determined from a filtering function of the visual data set for said light source in a spatial and/or temporal neighborhood of the light source position.

6. Method to generate mutual photometric effects in a common support space between a plurality of visual data sets respectively associated with individual support spaces, in which one positions the visual data sets in a common support space

   **characterized in that**:

- one estimates light sources for each of said visual data sets, and
- one applies estimated light source information derived from said estimated light sources for at least a first of said visual data sets to at least a second of said visual data sets so that the first visual data set illuminates the second visual data set.

7. Method according to claim 6 wherein, before applying said estimated light source information derived from said estimated light sources for said first visual data set to said second visual data set, one moves at least one of said light sources out of the individual support space associated with said first visual data set.

8. Method according to claim 6 or 7 wherein the estimation of the different light sources for the plurality of data sets is done according to the method of any of claims 1 to 5.

9. Device to estimate light sources in a common support space comprising at least one visual data set respectively associated with at least one individual support space having a position in the common support space, a dimension and a size,
   **characterized in that** said device is intended to determine the position of the light sources for each of said visual data sets according to the position, the dimension and the size of the individual support space associated with said visual data set and to provide a color distribution for said light sources that is determined according to said visual data set
   said device being preferably provided for putting in practice the method according to any of claims 1 to 5.

10. Device according to claim 9 **characterized in that** it comprises

    - means to determine the number N of light sources for each of said visual data sets,
    - means to determine the position of the N light sources, and
    - means to determine the spatial intensity and color distribution of each of said light sources.

11. Device (1) to generate mutual photometric effects in a common support space between a plurality of visual data sets respectively associated with individual support spaces, comprising means for positioning the visual data sets in a common support space and **characterized in that** said device comprises :

    - means (5,6) for estimating light sources for each of said visual data sets, and
    - means (7) for applying estimated light source information derived from said estimated light sources for at least a first of said visual data sets to at least a second of said visual data sets so that the first visual data set illuminates the second visual data set.

    said device being preferably provided for putting in practice the method according to any of claims 6 to 8.

12. Device according to claim 11 wherein the means for estimating the different light sources (5,6) emitted by the plurality of data sets are able to determine the position of the light sources for each of said visual data set according to the position, the dimension and the size of the individual support space associated with said visual data set and to determine the color distribution of said light sources according to said visual data set.

13. Audiovisual terminal comprising

    - means for receiving a first visual data set,
    - means for requesting the display of at least a second data set cooperating with the first data set,
    - means (2) for indicating the position of the at least second data set on the display,
    - means for generating photometric effects, and
    - means for displaying said visual data sets and modifying them according to the generated photometric effects,

    **characterized in that** said means for generating photometric effects comprise a generating device according to claim 11 or 12, and preferably also an estimating device according to claim 9 or 10.

FIG 1

**European Patent Office**

## EUROPEAN SEARCH REPORT

Application Number

EP 02 00 3028

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 886 704 A (KANG HO MIN ET AL) 23 March 1999 (1999-03-23) * abstract * * column 3, line 16 - line 21 * --- | 1,2,6-13 | G06T15/50 |
| D,A | NAOKI MUKAWA: "ESTIMATION OF LIGHT SOURCE INFORMATION FROM IMAGE SEQUENCE" SYSTEMS & COMPUTERS IN JAPAN, SCRIPTA TECHNICA JOURNALS. NEW YORK, US, vol. 23, no. 10, 1992, pages 92-99, XP000355611 ISSN: 0882-1666 * abstract * * page 98, column 2, line 8 - line 12 * --- | 1-13 | |
| D,A | SATO I ET AL: "ILLUMINATION DISTRIBUTION FROM BRIGHTNESS IN SHADOWS: ADAPTIVE ESTIMATION OF ILLUMINATION DISTRIBUTION WITH UNKNOWN REFLECTANCE PROPERTIES IN SHADOW REGIONS" PROCEEDINGS OF THE SEVENTH IEEE INTERNATIONAL CONFERENCE ON COMPUTER VISION. (ICCV 99). KERKYRA, GREECE, SEPT. 20 - 27, 1999, INTERNATIONAL CONFERENCE ON COMPUTER VISION, LOS ALMITOS, CA: IEEE COMP. PRESS, US, vol. 2 CONF. 7, 1999, pages 875-882, XP000984335 ISBN: 0-7695-0165-6 * abstract * ----- | 1-13 | TECHNICAL FIELDS SEARCHED (Int.Cl.7) G06T |

The present search report has been drawn up for all claims

| Place of search | Date of completion of the search | Examiner |
|---|---|---|
| BERLIN | 10 June 2002 | González Arias, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 00 3028

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2002

| Patent document cited in search report | Publication date | Patent family member(s) | Publication date |
|---|---|---|---|
| US 5886704 A | 23-03-1999 | NONE | |

EPO FORM P0459

For more details about this annex : see Official Journal of the European Patent Office, No. 12/82